# EUROPEAN PATENT SPECIFICATION

(11) **EP 2 650 522 B1**
(45) Date of publication and mention of the grant of the patent: **01.06.2016**
(21) Application number: 11847439.4
(22) Date of filing: 18.11.2011
(51) Int. Cl.: F02M 25/022, F02B 47/02, F02M 43/00, F02M 43/04, F02M 61/14, F02B 23/06

(54) **FUEL INJECTION DEVICE FOR INTERNAL COMBUSTION ENGINES, AND FUEL INJECTION METHOD FOR INTERNAL COMBUSTION ENGINES**
KRAFTSTOFFEINSPRITZVORRICHTUNG FÜR VERBRENNUNGSMOTOREN SOWIE KRAFTSTOFFEINSPRITZVERFAHREN FÜR VERBRENNUNGSMOTOREN
DISPOSITIF D'INJECTION DE CARBURANT DESTINÉ À DES MOTEURS À COMBUSTION INTERNE, ET PROCÉDÉ D'INJECTION DE CARBURANT DESTINÉ À DES MOTEURS À COMBUSTION INTERNE

(30) Priority: 08.12.2010 JP 2010273769
(43) Date of publication of application: 16.10.2013
(73) Proprietor: Mitsubishi Heavy Industries, Ltd., Tokyo 108-8215 (JP)
(72) Inventor: MURATA, Satoru, Tokyo 108-8215 (JP); HIGUCHI, Jun, Tokyo 108-8215 (JP)
(74) Representative: Hoffmann Eitle
(86) International application number: PCT/JP2011/076665
(87) International publication number: WO 2012/077484

(56) References cited:
- EP-A1- 0 553 364
- EP-A1- 0 676 536
- WO-A1-2006/092887
- JP-A- H09 126 084
- JP-A- 2002 317 622
- JP-B- 8 011 945
- JP-B2- 3 615 260

## Description

### {Technical Field}

The present invention relates to a fuel injection device for an internal combustion engine in which a plurality of fuel-injection valves are attached to each cylinder and to a fuel injection method for the internal combustion engine.

### {Background Art}

There is a known fuel injection device for an internal combustion engine in which a plurality of fuel-injection valves are attached to each cylinder, for example, as disclosed in Patent Literature 1.

### {Citation List}

### {Patent Literature}

{PTL 1} Japanese Examined Patent Application, Publication No. Hei 8-11945
{PTL 2} Publication of Japanese Patent No. 3615260 {Summary of Invention}

### {Technical Problem}

In recent years, from the viewpoint of environmental protection, a marine engine-exhaust-gas regulation zone (ECA: Emission Control Area) has been established, and NOx emissions are restricted within this environment regulated marine zone.

In addition, in the marine engine-exhaust-gas regulation zone, the regulations on exhaust gas are planned to be further strengthened in the near future, and, in order to comply with the new regulations, measures must be taken such as, for example, as disclosed in Patent Literatures 1 and 2 described above, changing a fuel injection mode (operating mode) of a main unit and a generator engine from injection of only fuel oil to injection of fuel oil and water in a multi-layer form or as an emulsion, before entering a marine engine-exhaust-gas regulation zone.

However, with a fuel-injection valve for injecting fuel oil and water in a multi-layer form or as an emulsion, as disclosed in the above-described Patent Literatures 1 and 2, because the amount of one injection is increased, the hole size of individual injection holes must be made larger than the hole size of injection holes of a fuel-injection valve for injecting only fuel oil. Because of this, with the inventions disclosed in the above-described Patent Literatures 1 and 2, when the fuel injection mode (operating mode) of the main unit and generator engine is changed from injection of fuel oil and water in a multi-layer form or as an emulsion to injection of only fuel oil, when going from inside a marine engine-exhaust-gas regulation zone to outside the marine engine-exhaust-gas regulation zone, there is a risk of decreasing the performance of the internal combustion engine due to a decrease in fuel-injection pressure and a deterioration in combustibility, as well as a risk of increasing dust and black smoke.

The present invention has been conceived in order to solve the above-described problems, and an object thereof is to provide an internal-combustion-engine fuel injection device and an internal-combustion-engine fuel injection method, with which it is possible to prevent a decrease in the performance of the internal combustion engine due to a decrease in fuel-injection pressure and a deterioration in combustibility, and also to prevent an increase in dust and black smoke.

### {Solution to Problem}

In order to achieve the above-described object, the present invention employs the following solutions.

An internal-combustion-engine fuel injection device according to a first aspect of the present invention is a fuel injection device for an internal combustion engine provided with, for one cylinder, at least two fuel-injection valves provided with valve-opening-pressure adjusting devices that adjust the valve-opening pressure of needle valves, wherein, when injecting fuel oil and an inert substance into a cylinder liner, the fuel oil and the inert substance are injected from all of the fuel-injection valves; and when injecting only the fuel oil into the cylinder liner, the valve-opening-pressure adjusting device is operated so that the needle valve of at least one of the at least two fuel-injection valves is pressed by a force that is equal to or greater than the valve-opening pressure of the needle valve, blocking the fuel injection from that fuel-injection valve.

An internal-combustion-engine fuel injection method according to a second aspect of the present invention is a fuel injection method for an internal combustion engine provided with, for one cylinder, at least two fuel-injection valves provided with valve-opening-pressure adjusting devices that adjust the valve-opening pressure of needle valves, wherein, when injecting fuel oil and an inert substance into a cylinder liner, the fuel oil and the inert substance are injected from all of the fuel-injection valves; and when injecting only the fuel oil into the cylinder liner, the valve-opening-pressure adjusting device is operated so that the needle valve of at least one of the at least two fuel-injection valves is pressed by a force that is equal to or greater than the valve-opening pressure of the needle valve, blocking the fuel injection from that fuel-injection valve.

With the internal-combustion-engine fuel injection device or the internal-combustion-engine fuel injection method according to the above-described aspects, when injecting only the fuel oil into the cylinder liner, the valve-opening-pressure adjusting device is operated so that the needle valve of at least one of the at least two fuel-injection valves is pressed by a force that is equal to or greater than the valve-opening pressure of the needle valve, blocking the fuel injection from that fuel-injection valve.

By doing so, it is possible to prevent a decrease in the performance of the internal combustion engine due to a decrease in fuel-injection pressure and a deterioration in combustibility, and also to prevent an increase in dust and black smoke.

In the internal-combustion-engine fuel injection device described above, it is more preferable that an even number of the fuel-injection valves be provided at equal intervals around the circumferential direction of the cylinder liner; and that, when injecting only the fuel oil into the cylinder liner, the valve-opening-pressure adjusting device be operated so that, of the at least two fuel-injection valves, the needle valves of at least one pair of fuel-injection valves that are disposed facing each other are pressed by a force that is equal to or greater than the valve-opening pressure of the needle valves, blocking the fuel injection from those fuel-injection valves.

In the internal-combustion-engine fuel injection method described above, it is more preferable that, in the internal combustion engine, an even number of the fuel-injection valves be provided at equal intervals around the circumferential direction of the cylinder liner; and that, when injecting only the fuel oil into the cylinder liner, the valve-opening-pressure adjusting device be operated so that, of the at least two fuel-injection valves, the needle valves of at least one pair of fuel-injection valves that are disposed facing each other are pressed by a force that is equal to or greater than the valve-opening pressure of the needle valves, blocking the fuel injection from those fuel-injection valves.

With such an internal-combustion-engine fuel injection device or an internal-combustion-engine fuel injection method, when injecting only the fuel oil into the cylinder liner, the valve-opening-pressure adjusting device is operated so that, of the at least two fuel-injection valves, the needle valves of at least one pair of fuel-injection valves that are disposed facing each other are pressed by a force that is equal to or greater than the valve-opening pressure of the needle valves, blocking the fuel injection from those fuel-injection valves.

By doing so, the thermal load on the cylinder liner can be made (substantially) uniform (dispersed) in the circumferential direction, and it is possible to avoid local concentration of thermal stress.

In the internal-combustion-engine fuel injection device described above, it is more preferable that, when injecting only the fuel oil into the cylinder liner, the fuel-injection valve for which the fuel injection is blocked and the fuel-injection valve for which the fuel injection is allowed be switched according to a predetermined cycle.

In the internal-combustion-engine fuel injection method described above, it is more preferable that, in the internal combustion engine, when injecting only the fuel oil into the cylinder liner, the fuel-injection valve for which the fuel injection is blocked and the fuel-injection valve for which the fuel injection is allowed be switched according to a predetermined cycle.

With such an internal-combustion-engine fuel injection device or an internal-combustion-engine fuel injection method, when injecting only the fuel oil into the cylinder liner, the fuel-injection valve for which the fuel injection is blocked and the fuel-injection valve for which the fuel injection is allowed are switched according to the predetermined cycle.

By doing so, the thermal load on the cylinder liner can be made more uniform (dispersed) in the circumferential direction, and it is possible to reliably avoid local concentration of thermal stress.

An internal combustion engine according to a third aspect of the present invention is equipped with any one of the internal-combustion-engine fuel injection devices described above.

In the internal combustion engine according to the third aspect of the present invention, the internal-combustion-engine fuel injection device is installed (provided), with which, even when injecting only the fuel oil into the cylinder liner, it is possible to prevent a decrease in the performance of the internal combustion engine due to a decrease in fuel-injection pressure and a deterioration in combustibility, and also to prevent an increase in dust and black smoke.

By doing so, the combustibility in the cylinder can be enhanced when injecting only the fuel oil into the cylinder liner, and sooty smoke and black smoke exhausted from the cylinder interior can be reduced.

A ship according to a fourth aspect of the present invention is equipped with the internal combustion engine described above.

In the ship according to the fourth aspect of the present invention, the internal combustion engine is installed (provided), with which, even when injecting only the fuel oil into the cylinder liner, it is possible to prevent a decrease in the performance of the internal combustion engine due to a decrease in fuel-injection pressure and a deterioration in combustibility, and also to prevent an increase in dust and black smoke.

By doing so, the overall fuel economy of the ship can be enhanced, cruising distance can be extended, and sooty smoke and black smoke exhausted from a funnel (chimney) can also be reduced.

### {Advantageous Effects of Invention}

An internal-combustion-engine fuel injection device and an internal-combustion-engine fuel injection method according to the present invention afford an advantage in that it is possible to prevent a decrease in the performance of the internal combustion engine due to a decrease in fuel-injection pressure and a deterioration in combustibility, and also to prevent an increase in dust and black smoke.

### {Brief Description of Drawings}

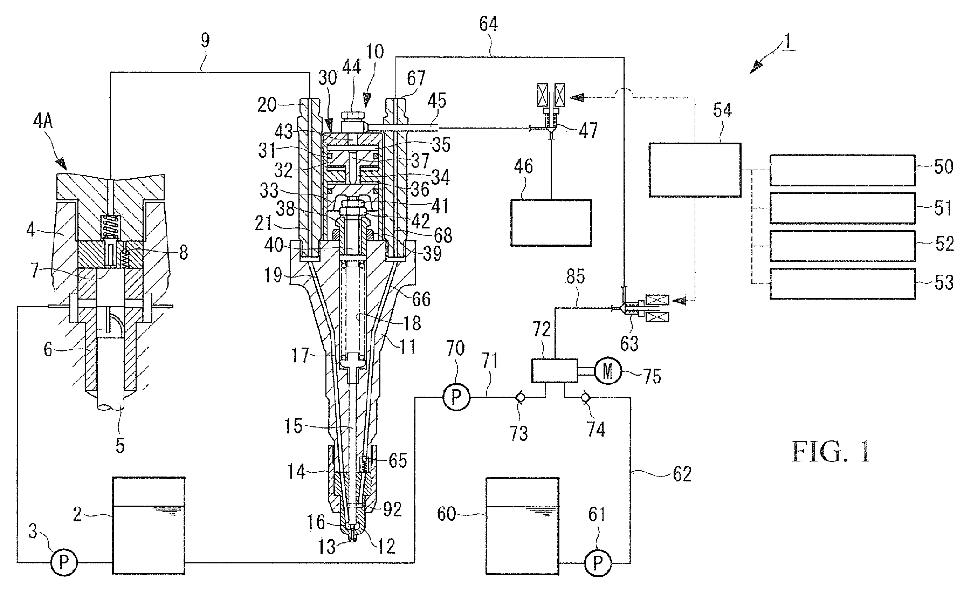

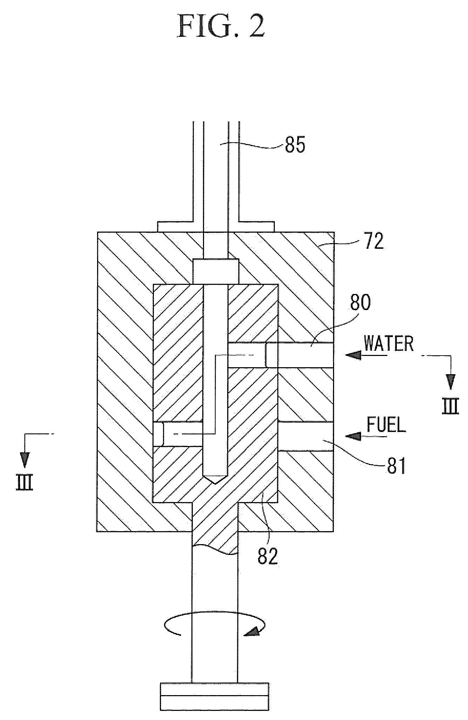

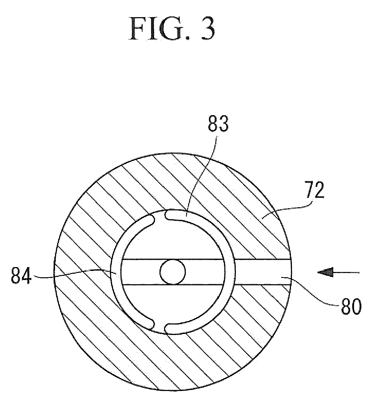

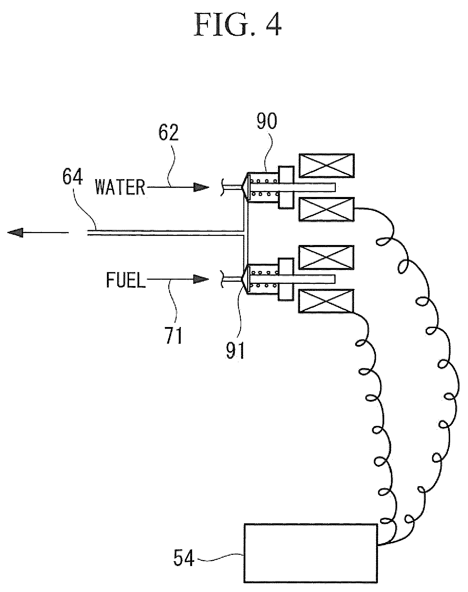

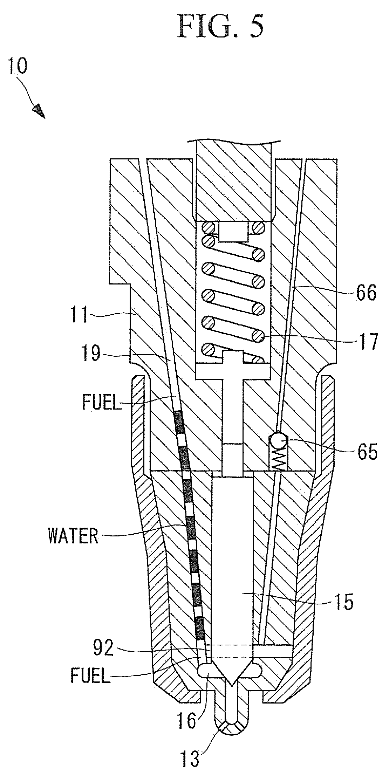

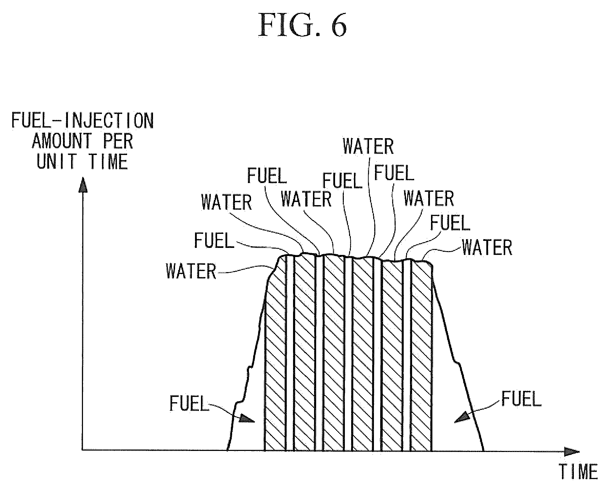

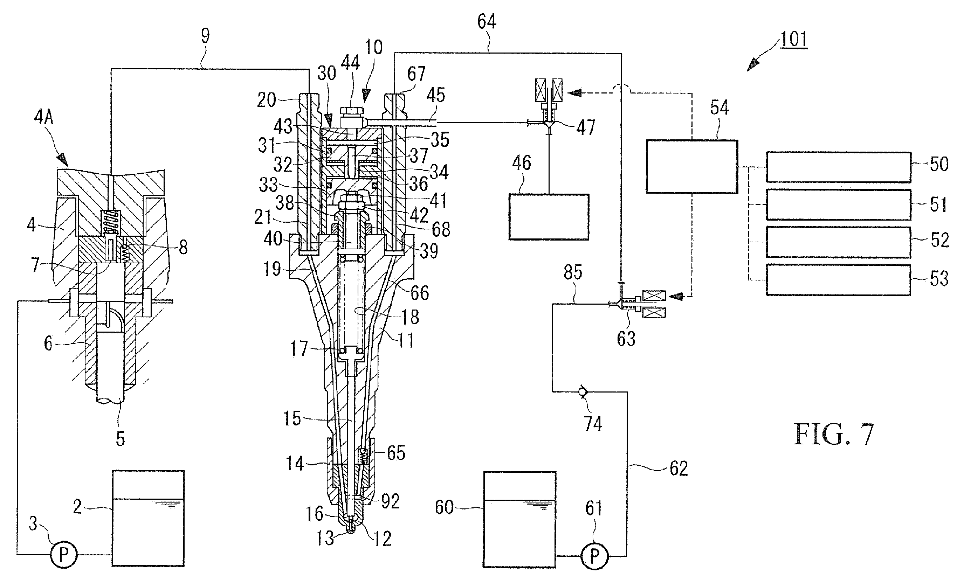

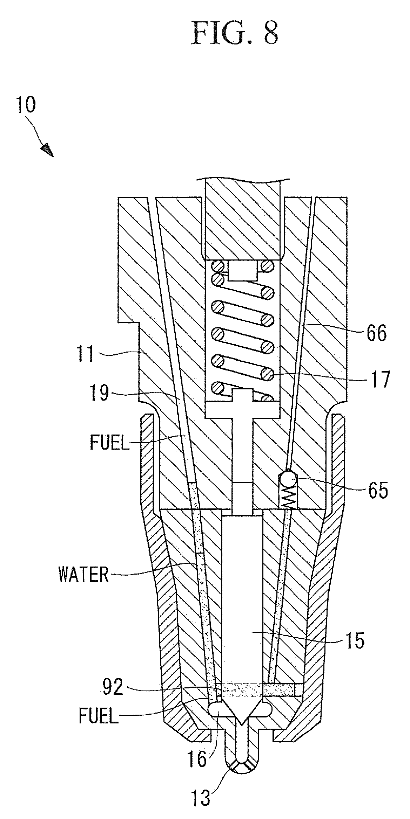

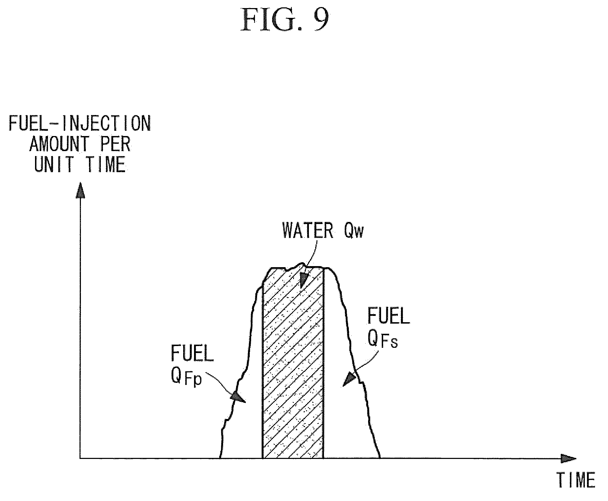

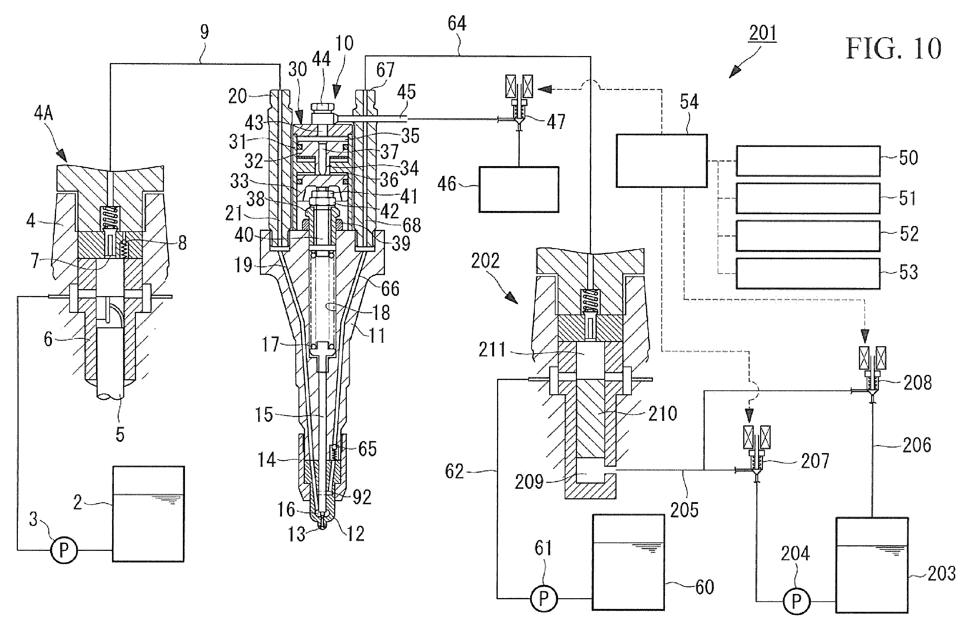

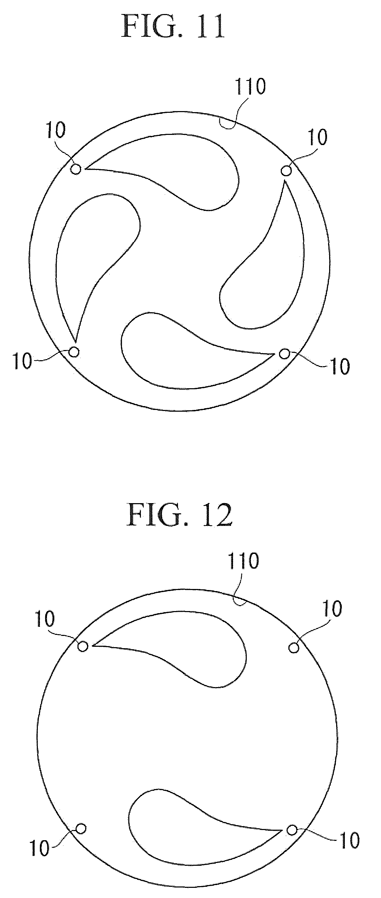

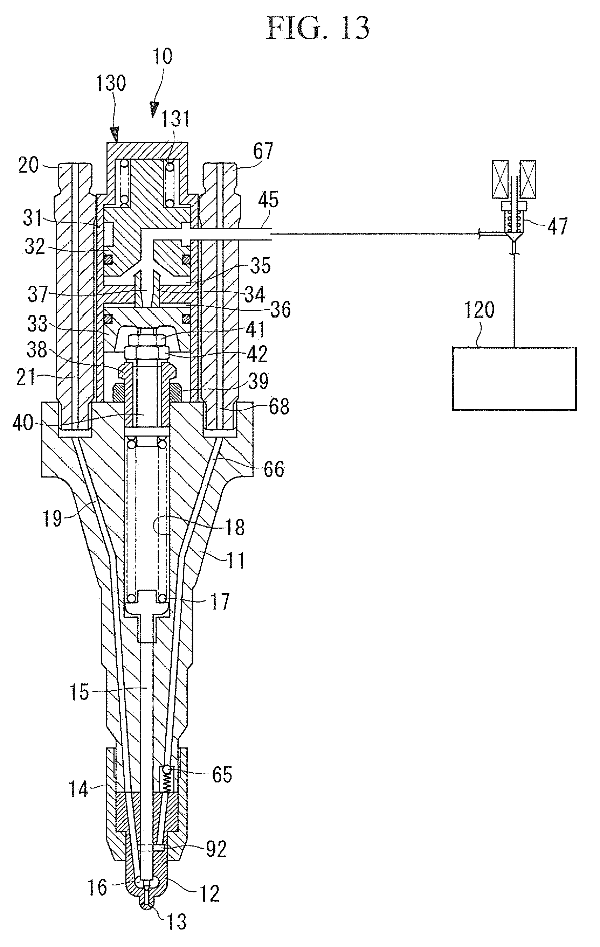

{Fig. 1} Fig. 1 is a diagram showing the configuration of an internal-combustion-engine fuel injection device according to a first embodiment of the present invention.
{Fig. 2} Fig. 2 is a longitudinal sectional view of a switch-valve device shown in Fig. 1.
{Fig. 3} Fig. 3 is a sectional view taken along arrows III-III in Fig. 2.
{Fig. 4} Fig. 4 is a diagram showing the configuration of a modification of the switch-valve device.
{Fig. 5} Fig. 5 is a diagram for explaining the operation of the internal-combustion-engine fuel injection device according to the first embodiment of the present invention.
{Fig. 6} Fig. 6 is a diagram for explaining the operation of the internal-combustion-engine fuel injection device according to the first embodiment of the present invention.
{Fig. 7} Fig. 7 is a diagram showing the configuration of an internal-combustion-engine fuel injection device according to a second embodiment of the present invention.
{Fig. 8} Fig. 8 is a diagram for explaining the operation of the internal-combustion-engine fuel injection device according to the second embodiment of the present invention.
{Fig. 9} Fig. 9 is a diagram for explaining the operation of the internal-combustion-engine fuel injection device according to the second embodiment of the present invention.
{Fig. 10} Fig. 10 is a diagram showing the configuration of an internal-combustion-engine fuel injection device according to a third embodiment of the present invention.
{Fig. 11} Fig. 11 is a schematic diagram showing a fuel flame state inside a cylinder (cylinder interior) of an internal combustion engine provided with an internal-combustion-engine fuel injection device according to a fifth embodiment of the present invention.
{Fig. 12} Fig. 12 is a schematic diagram showing a fuel flame state inside a cylinder (cylinder interior) of an internal combustion engine provided with the internal-combustion-engine fuel injection device according to the fifth embodiment of the present invention.
{Fig. 13} Fig. 13 is a sectional view of a fuel-injection valve according to another embodiment of the present invention.

### {Description of Embodiments}

### {First Embodiment}

An internal-combustion-engine fuel injection device and an internal-combustion-engine fuel injection method according to a first embodiment of the present invention will be described with reference to Figs. 1 to 6.

Fig. 1 is a diagram showing the configuration of the internal-combustion-engine fuel injection device according to this embodiment, Fig. 2 is a longitudinal sectional view of a switch-valve device, Fig. 3 is a sectional view taken along arrows III-III in Fig. 2, Fig. 4 is a diagram showing the configuration of a modification of the switch-valve device in Fig. 4, and Figs. 5 and 6 each show a diagram for explaining the operation of the present invention.

An internal-combustion-engine fuel injection device 1 shown in Figs. 1 to 6 is installed in an internal combustion engine in a large diesel engine for a ship or the like and is configured so that fuel and water can be injected from the same fuel-injection valve as means of reducing nitrogen oxides (NOx) in exhaust gas exhausted from the internal combustion engine (not shown) in a large diesel engine for a ship or the like and, at the same time, also achieving reductions in black smoke exhaust and fuel consumption rate.

In Fig. 1, reference sign 2 indicates a fuel tank; reference sign 3 indicates a fuel supply pump; reference sign 4 indicates a fuel-injection-pump main body; reference sign 5 indicates a plunger; reference sign 6 indicates a plunger barrel; reference sign 7 indicates a discharge valve; reference sign 8 indicates a two-way delivery valve (pressure-regulating check valve) that is provided in a side channel of the discharge valve 7; reference sign 9 indicates a fuel injection pipe; reference sign 10 indicates a fuel-injection valve; reference sign 11 indicates a fuel-injection valve main body; reference sign 12 indicates a nozzle tip in which a plurality of injection holes 13 are provided at the distal end thereof; reference sign 14 indicates a nozzle nut with which the nozzle tip 12 is fastened to the fuel-injection valve main body 11; reference sign 15 indicates a needle valve fitted in the nozzle tip 12 and the fuel-injection valve main body 11 in a manner allowing reciprocating sliding movement thereof; reference sign 16 indicates an oil reservoir formed facing the outer circumference of the bottom portion of the needle valve 15; reference sign 17 indicates a needle-valve spring that biases the needle valve 15 in the valve-closing direction; reference sign 18 indicates a spring chamber in which the needle-valve spring 17 is accommodated; and reference sign 19 indicates a fuel pathway that is provided inside the fuel-injection valve main body 11 and inside the nozzle tip 12 so as to communicate with the oil reservoir 16. In addition, reference sign 20 indicates a connector that is screwed into and secured to the top portion of the fuel-injection valve main body 11 in a fluid-tight manner, and a fuel inlet pathway 21 provided inside thereof is connected to the fuel pathway 19 at an exit end and to the fuel-injection pipe 9 at an inlet end thereof.

Reference sign 30 indicates an air-pressure actuator (valve-opening-pressure adjusting device) and is configured as follows.

Reference sign 31 indicates a cylinder fixed at the top portion of the fuel-injection valve main body 11; reference sign 32 indicates a first piston that is fitted into the inner circumference at the top portion of the cylinder 31 in a manner allowing reciprocating movement thereof; reference sign 33 indicates a second piston that is fitted into the inner circumference at the bottom portion of the cylinder 31 in a manner allowing reciprocating movement thereof; and a bottom end surface of a protrusion 34 formed at the bottom portion of the first piston 32 is in contact with a top surface of the second piston 33. In addition, reference sign 35 indicates a first air chamber formed facing the top surface of the first piston 32; reference sign 36 indicates a second air chamber formed facing the top surface of the second piston 33; and the first air chamber 35 communicates with the second air chamber 36 via an air hole 37 provided inside the first piston 32 and a plurality of pathway grooves (not shown) formed in a radiating manner at the bottom end surface of the protrusion 34.

Reference sign 38 indicates an adjusting screw that is screwed into the top portion of the fuel-injection valve main body 11; and reference sign 39 indicates a lock nut that serves as a rotation stop for the adjusting screw 38. Reference sign 40 indicates a spindle fitted inside the adjusting screw 38 in a manner allowing reciprocating sliding movement thereof, wherein the top-end surface of the spindle 40 is in contact with the bottom surface of the second piston 33, and the bottom-end surface of a flange formed at the bottom portion of the spindle 40 forms a spring bearing for the needle-valve spring 17 on the top-end-surface side thereof. Reference signs 41 and 42 each indicate a nut attached to the top portion of the spindle 40, and the nut 42 is secured by the nut 41 after adjusting the nut 42 so that a distance between the bottom-end surface of the nut 42 and the top-end surface of the adjusting screw 38 becomes a rated value in a state in which the first air chamber 35 and the second air chamber 36 are not pressurized.

Reference sign 43 indicates an air inlet pathway for the first air chamber 35; reference sign 44 indicates an air inlet joint; and an air pathway (not shown) formed inside thereof and the air inlet pathway 43 allow an operating-air pipe 45 to communicate with the first air chamber 35.

The operating-air pipe 45 is an air pipe that supplies operating air pressurized to a predetermined pressure at an air source 46 selectively to the two air chambers 35 and 36 in the air-pressure actuator 30. Reference sign 47 indicates an operating-air control valve that opens and closes a pipe channel of the operating-air pipe 45. In addition, reference sign 50 indicates a rotational-speed detector that detects the rotational speed (crank-shaft rotational speed) of the internal combustion engine; reference sign 51 indicates a scavenging-air-pressure detector that detects scavenging-air pressure; reference sign 52 indicates a rack-position detector that detects the position of a fuel-adjusting rack in a fuel-injection pump 4A; and reference sign 53 indicates an exhaust-temperature detector that detects the exhaust temperature in an exhaust pathway. Furthermore, reference sign 54 indicates a controller that outputs opening/closing signals (commands) to the operating-air control valve 47 and a (solenoid) control valve (mixing-rate control valve) 63, described later, based on engine-operating-state detection values from engine-operating-state detection units, such as the rotational-speed detector 50, the scavenging-air-pressure detector 51, rack-position detector 52, the exhaust-temperature detector 53, and so forth.

On the other hand, reference sign 60 indicates a water tank; reference sign 61 indicates a water-supply pump; reference sign 62 indicates a water-supply pipe; reference sign 63 indicates a (solenoid) control valve (mixing-rate control valve); reference sign 64 indicates a fuel/water-supply pipe; and reference sign 65 indicates a check valve that prevents a reverse flow toward the control valve 63. In addition, reference sign 66 indicates a fuel/water-pathway provided inside the fuel-injection valve main body 11 and inside the nozzle tip 12 to communicate with the oil reservoir 16; reference sign 67 indicates a connector that is screwed into and secured to the top portion of the fuel-injection valve main body 11 in a fluid-tight manner; and a fuel/water-inlet pathway 68 provided inside thereof is connected to the fuel/water-pathway 66 at an exit end and to the fuel/water-supply pipe 64 at an inlet end thereof.

Reference sign 70 indicates a fuel-pressurizing pump, which is a pump that takes in and pressurizes fuel from the fuel tank 2, and the fuel pressurized at the fuel-pressurizing pump 70 is guided to the switch-valve device 72 via the fuel-supply pipe 71. In addition, the water pressurized at the water-supply pump 61 is guided to the switch-valve device 72 via the water-supply pipe 62. Check valves 73 and 74 that allow only the passage of flows toward the switch-valve device 72 from the fuel tank 2 and the water tank 60 are provided between the switch-valve device 72 and the fuel-supply pipe 71 and between the switch-valve device 72 and the water-supply pipe 62, respectively. Reference sign 75 indicates a drive device (a drive device synchronized with the rotational speed of an internal combustion engine, an electric motor that rotates at a constant rotational speed, or the like) that drives the switch-valve device 72.

Figs. 2 and 3 are diagrams showing details of the switch-valve device 72, and, in Fig. 2 and/or Fig. 3, reference sign 80 indicates a water-supply port, reference sign 81 indicates a fuel-supply port, and reference sign 82 indicates a rotary valve. The rotary valve 82 is provided with a water opening groove 83 and a fuel opening groove 84, and water and fuel are alternately delivered into the fuel/water-supply pipe 85 (see Fig. 1) by means of the rotation of the rotary valve 82 so as to reach the control valve 63.

Fig. 4 is a diagram showing a modification of the switch-valve device in which the controller 54 and two (solenoid) control valves 90 and 91 are combined, and, in Fig. 4, reference sign 90 indicates a water control valve, reference sign 91 indicates a fuel control valve, which are controlled by the controller 54 to be alternately opened and closed for a predetermined period during an idle period of the fuel-injection pump 4A (see Fig. 1).

Then, when the switch-valve device 72 shown in Figs. 2 and 3 is provided, the controller 54 controls the control valve 63 so as to be alternately opened and closed during the idle period of the fuel-injection pump 4A, and, when the control valve 63 is opened, the pressurized water and fuel flow into the fuel/water-supply pipe 64. At this time, by the action of the switch-valve device 72, the water flows into (is supplied to) the fuel/water-supply pipe 85 via the water opening groove 83, and the fuel alternately flows into (is supplied to) the fuel/water-supply pipe 85 via the fuel opening groove 84, in correspondence with the open periods of the control valve 63.

In addition, when the switch-valve device shown in Fig. 4 is provided, the controller 54 controls the water control valve 90 and the fuel control valve 91 so as to be alternately opened and closed during the idle period of the fuel-injection pump 4A, and thus, the water and fuel alternately flow into the fuel/water-supply pipe 64 in correspondence with the open periods of the control valves 90 and 91.

As a result, a liquid column in which water and fuel form alternating multiple layers is formed in the fuel/water-supply pipe 64. During an injection period, this multi-layer liquid column passes through the fuel/water-inlet pathway 68 provided in the connector 67, the fuel/water pathway 66 and the check valve 65 provided in the fuel-injection valve main body 11, and the joining portion 92 provided in the nozzle tip 12, thus flowing into the fuel pathway 19 while maintaining the multi-layer structure, and the fuel on the upstream side of the joining portion 92 in the fuel pathway 19, that is, on the fuel-injection-pump 4A side, is returned by pushing and opening the two-way delivery valve 8 provided in the fuel-injection pump 4A, thus loading the multi-layer liquid column into the fuel pathway 19. At this time, because the multi-layer liquid column formed in the fuel/water pathway 66 is loaded while maintaining the multi-layer structure in which water and fuel form the alternating multiple layers, the alternating multi-layer liquid is formed in the fuel pathway 19, where, as shown in Fig. 5, the arrangement thereof is like fuel (white unfilled portion) - water (dark filled portion) - fuel - water...

Then, when the fuel-injection pump 4A is operated and injection is started, as shown in Fig. 6, the fuel in the oil reservoir 16 is injected by opening the needle valve 15, followed by injections of water and fuel in the fuel pathway 19 in an alternating multi-layered manner, and finally, only fuel is injected, and these processes are repeated. Note that, even if the injection amount of water required to reduce NOx in the exhaust gas is increased, there is no risk of destabilizing the engine rotation.

In this embodiment, one fuel-injection pump 4A is provided in each cylinder in the internal combustion engine, and at least two fuel-injection valves 10 are provided in each fuel-injection pump 4A, and, when continuously injecting only the fuel, which is supplied via the fuel injection pipe 9, from the fuel-injection valves 10 (for example, when navigating outside a marine engine-exhaust-gas regulation zone (ECA: Emission Control Area)), the supply of the multi-layer liquid column from the fuel/water-supply pipe 64 to both fuel-injection valves 10 is blocked, the fuel supply from the fuel-injection pipe 9 to one fuel-injection valve 10 is also blocked, only the fuel supply from the fuel-injection pipe 9 to the other fuel-injection valve 10 is allowed, and thus, the fuel is injected only from the other fuel-injection valve 10.

Note that the fuel-injection valves 10 in this embodiment are provided at the peak portion of a cylinder cover (not shown) at equal intervals (90° or 180° intervals) around the circumferential direction of a cylinder liner 110 (see Figs. 11 and 12).

Specifzcally, a multi-layer-liquid-column blocking command signal is output to the control valve 63 (or the control valves 90 and 91) from the controller 54, the control valve 63 (or the control valves 90 and 91) blocks the pipe channel (flow channel) to the fuel/water-supply pipe 64, and also, a fuel blocking command signal is output from the controller 54 to the operating-air control valve 47 disposed in correspondence with the one fuel-injection valve 10; thus, the operating-air control valve 47 is operated. When the operating-air control valve 47 is operated, so that the pipe channel of the operating-air pipe 45 leading to the one fuel-injection valve 10 is opened, pressurized operating air from the air source 46 is introduced to the second air chamber 36 by passing through the operating-air pipe 45 and by passing through the first air chamber 35 in the air-pressure actuator 30, the air hole 37, and a plurality of pathway grooves (not shown) formed radially at a bottom-end surface of the protrusion 34, thus, acting on the top surface of the first piston 32 and the top surface of the second piston 33 at the same time to press the first piston 32 and the second piston 33 downward. This pressing force is transmitted to the needle-valve spring 17 via the spindle 40, thus preventing opening of the needle valve 15 by pressing, via the needle-valve spring 17, the needle valve 15 against a valve seat (not shown) on the nozzle-tip 12 side with a pressure equal to or greater than the valve-opening pressure therefor. By doing so, the fuel injection from the fuel-injection valve 10 is blocked.

Note that the pressing force at this time depends on the distance between the bottom-end surface of the nut 42 and the top-end surface of the adjusting screw 38 before applying pressure, and this distance is determined based on the required pressing force.

In addition, the controller 54 receives as inputs ship position data from a navigation assistance device (not shown) that judges whether the ship is located in a marine engine-exhaust-gas regulation zone or located outside of a marine engine-exhaust-gas regulation zone and position data from switches operated by a navigator/sailor in the bridge or an engineer/engine-room worker in the engine room who has judged that the ship is in a marine engine-exhaust-gas regulation zone or that the ship is outside of a marine engine-exhaust-gas regulation zone, in addition to the engine-operating-state detection values from the engine-operating-state detection units, such as the rotational-speed detector 50, the scavenging-air-pressure detector 51, the rack-position detector 52, the exhaust-temperature detector 53, and so forth.

With the internal-combustion-engine fuel injection device 1 and the internal-combustion-engine fuel injection method according to this embodiment, when injecting only the fuel oil into the cylinder liner 110 (see Figs. 11 and 12), the air-pressure actuator (valve-opening-pressure adjusting device) 30 is operated, and, because the needle valve 15 of one fuel-injection valve 10 of the two fuel-injection valves 10 is pressed by a force equal to or greater than the valve opening pressure of the needle valve 15, fuel injection from that fuel-injection valve 10 is blocked.

By doing so, it is possible to prevent a decrease in the performance of the internal combustion engine due to a decrease in fuel-injection pressure and a deterioration in combustibility, and it is also possible to prevent an increase in dust and black smoke.

### {Second Embodiment}

An internal-combustion-engine fuel injection device and an internal-combustion-engine fuel injection method according to a second embodiment of the present invention will be described with reference to Figs. 7 to 9.

Fig. 7 is a diagram showing the configuration of an internal-combustion-engine fuel injection device according to this embodiment, and Figs. 8 and 9 each show a diagram for explaining the operation thereof.

As shown in Fig. 7, an internal-combustion-engine fuel injection device 101 according to this embodiment differs from the one described in the first embodiment described above in that the fuel-pressurizing pump 70, the fuel-supply pipe 71, the switch-valve device 72, and the check valve 73 are omitted, thus simplifying the configuration thereof. Because other components are the same as those of the first embodiment described above, descriptions of those components will be omitted herein.

Note that the same reference signs are assigned to the components that are the same as those of the first embodiment described above and descriptions thereof will be omitted.

In addition, as for the fuel/water-supply pipe 85, the control valve 63, the fuel/water-supply pipe 64, the fuel/water-inlet pathway 68, and the fuel/water pathway 66 described in the first embodiment, because only water supplied from the water tank 60 via the water-supply pump 61 passes therethrough, in this embodiment, reference sign 85 indicates a water-supply pipe 85, reference sign 64 indicates a water-supply pipe, reference sign 68 indicates a water inlet pathway, and reference sign 66 indicates a water pathway.

In this embodiment, water fed from the water tank 60 by the water-supply pump 61 is delivered to the control valve 63 by passing through the water-supply pipe 62; during the idle period in which the plunger 5 of the fuel-injection pump 4A is not feeding the fuel, the control valve 63 is maintained in the open state for a predetermined period by means of the controller 54; and a predetermined amount of water is delivered into the fuel-injection valve 10 via the water-supply pipe 64. At this time, assuming that the valve-opening pressure for the two-way delivery valve 8 in the fuel-injection pump 4A is P_{R} and the valve-opening pressure for the check valve 65 in the fuel-injection valve 10 is P_{P}, because P₀>P_{R} and P₀>P_{P} with regard to the valve-opening pressure P₀ of the needle valve 15, the supplied water flows into the fuel pathway 19 by passing through the water pathway 66 and the joining portion 92 via the check valve 65.

Then, the fuel on the upstream side of the joining portion 92 in the fuel pathway 19, that is, on the fuel-injection-pump 4A side, is returned by pressing and opening the two-way delivery valve 8 provided in the fuel-injection pump 4A, and a water column is loaded into the fuel pathway 19.

As a result, as shown in Fig. 8, a situation is created in which, in the fuel-injection valve 10, volume V₁+V₂, which is the sum of the volume V₂ of the oil reservoir 16 and the volume V₁ of a portion of the fuel pathway 19 from the joining portion 92 to the oil reservoir 16, is filled with fuel, the fuel pathway 19 on the upstream side of the joining portion 92 is filled with the predetermined amount of water, and a portion further upstream thereof is filled with fuel again.

Next, when the plunger 5 in the fuel-injection pump 4A is raised, starting to compress the fuel, the pressure in fuel-injection pipe 9, the fuel pathway 19, and the oil reservoir 16 is increased, and the needle valve 15 is opened upon reaching or exceeding the valve-opening pressure P₀ of the needle valve 15. At this time, water in the water pathway 66 is not pushed back toward the water tank 60 due to the operation of the check valve 65.

As shown in Fig. 9, upon achieving the valve-opening pressure P₀ of the needle valve 15, fuel having the volume V₁+V₂ filling the volumes of the oil reservoir 16 and the fuel pathway 19 up to the joining portion 92 is injected from the injection holes 13 of the fuel-injection valve 10 first, the predetermined amount of water is injected next, and the entire amount of the remaining fuel is injected last. Here, assuming that the fuel amount injected in one injection is Q_{F}, the fuel amount Q_{Fp} injected first is Q_{Fp}=V₁+V₂, as described above, the entire amount of water, Q_{W}, is injected next, and, assuming that the remaining fuel amount is Q_{Fs}, Q_{Fs}=Q_{F}-Q_{Fp} is injected last.

As a result, ignition in an early stage of a diesel fuel stage is reliably performed by means of the fuel Q_{Fp}, followed by an increase in air introduced into the spray by means of water Q_{W}, by which the fuel velocity is increased, the generation of black smoke is decreased, and, at the same time, NOx is reduced by the introduction of water into a flame region.

Because advantageous effects of the internal-combustion-engine fuel injection device 101 and the internal-combustion-engine fuel injection method according to this embodiment are the same as those of the first embodiment described above, descriptions thereof will be omitted herein.

### {Third Embodiment}

An internal-combustion-engine fuel injection device and an internal-combustion-engine fuel injection method according to a third embodiment of the present invention will be described with reference to Fig. 10.

Fig. 10 is a diagram showing the configuration of an internal-combustion-engine fuel injection device according to this embodiment.

An internal-combustion-engine fuel injection device 201 according to this embodiment differs from the one in the second embodiment described above in that the check valve 74 and the water-supply pipe 85 shown in Fig. 7 are omitted, that a water-supply device 202 is provided instead of the control valve 63, and that a working-oil tank 203, a working-oil pump 204, a working-oil supply pipe 205, a working-oil return pipe 206, and two solenoid valves 207 and 208 are newly provided. Because other components are the same as those of the second embodiment described above, descriptions of those components will be omitted herein.

Note that the same reference signs are assigned to the components that are the same as those of the second embodiment described above, and descriptions thereof will be omitted.

The working-oil supply pipe 205 is a pipe that guides the working oil retained in the working-oil tank 203 to the water-supply device 202, and the working-oil pump 204 that pressurizes the working oil guided from the working-oil tank 203 and the solenoid valve 207 that opens and closes a flow channel from the working-oil pump 204 to the water-supply device 202 are connected in intermediate portions thereof. Then, when the controller 54 opens the solenoid valve 207 and closes the solenoid valve 208 in a state in which the working-oil pump 204 is operating, the pressurized working oil flows into a working-oil chamber 209 that forms the water-supply device 202, thus acting on one end surface (an end surface on the bottom side in Fig. 10) of a water-supply piston 210 that forms the water-supply device 202, which pushes up the water-supply piston 210, delivering a predetermined amount of water existing in a water feeding chamber 211 into the fuel-injection valve 10 via the water-supply pipe 64.

The working oil return pipe 206 is a pipe that communicates between an intermediate portion of the working-oil supply pipe 205, which communicates between the solenoid valve 207 and the water-supply device 202, and the working-oil tank 203, thus guiding the working oil existing in the working-oil chamber 209 to the working-oil tank 203, an, the solenoid valve 208 that opens and closes a flow channel from the working-oil chamber 209 to the working-oil tank 203 is connected to the working oil return pipe 206 at an intermediate portion thereof. Then, when the controller 54 closes the solenoid valve 207 and opens the solenoid valve 208, the pressurized water flows into a water feeding chamber 211, thus acting on the other end surface (an end surface on the top side in Fig. 10) of the water-supply piston 210, which pushes down the water-supply piston 210, returning the working oil existing in the working-oil chamber 209 to the working-oil tank 203 via a portion of the working-oil supply pipe 205 and also via the working-oil return pipe 206.

In this embodiment, during the idle period in which water fed from the water tank 60 by the water-supply pump 61 is delivered to the water-supply device 202 by passing through the water-supply pipe 62, and the plunger 5 in the fuel-injection pump 4A does not feed the fuel, the solenoid valve 207 is maintained in the open state for a predetermined period by means of the controller 54, and the predetermined amount of water is delivered into the fuel-injection valve 10 via the water-supply pipe 64. At this time, assuming that the valve-opening pressure for the two-way delivery valve 8 in the fuel-injection pump 4A is P_{R} and the valve-opening pressure for the check valve 65 in the fuel-injection valve 10 is P_{P}, because P₀>P_{R} and P₀>P_{P} with regard to the valve-opening pressure P₀ of the needle valve 15, the supplied water flows into the fuel pathway 19 by passing through the water pathway 66 and the joining portion 92 via the check valve 65.

Then, the fuel on the upstream side of the joining portion 92 in the fuel pathway 19, that is, the fuel-injection-pump 4A side, is returned by pressing open the two-way delivery valve 8 provided in the fuel-injection pump 4A, and the water column is loaded into the fuel pathway 19.

As a result, as shown in Fig. 8, a situation is created in which, in the fuel-injection valve 10, the volume V₁+V₂, which is the sum of the volume V₂ of the oil reservoir 16 and the volume V₁ of the portion of the fuel pathway 19 from the joining portion 92 to the oil reservoir 16, is filled with the fuel, the fuel pathway 19 on the upstream side of the joining portion 92 is filled with the predetermined amount of water, and the portion further upstream thereof is filled with the fuel again.

Next, when the plunger 5 in the fuel-injection pump 4A is raised, starting to compress the fuel, the pressure in the fuel-injection pipe 9, the fuel pathway 19, and the oil reservoir 16 is increased, and the needle valve 15 is opened upon reaching or exceeding the valve opening pressure P₀ of the needle valve 15. At this time, water in the water pathway 66 is not pushed back toward the water tank 60 due to the operation of the check valve 65.

As shown in Fig. 9, upon achieving the valve-opening pressure P₀ of the needle valve 15, the fuel having the volume V₁+V₂ filling the volumes of the oil reservoir 16 and the fuel pathway 19 up to the joining portion 92 is injected from the injection holes 13 of the fuel-injection valve 10 first, the predetermined amount of water is injected next, and the entire amount of the remaining fuel is injected last. Here, assuming that the fuel amount injected in one injection is Q_{F}, the fuel amount Q_{F}p injected first is Q_{Fp}=V₁+V₂, as described above, the entire amount of water, Q_{W}, is injected next, and, assuming that the remaining fuel amount is Q_{Fs}, Q_{Fs}=Q_{F}-Q_{Fp} is injected last.

As a result, ignition in an early stage of the diesel fuel stage is reliably performed by means of the fuel Q_{Fp}, followed by an increase in air introduced into the spray by means of water Q_{W}, by which the fuel velocity is increased, the generation of black smoke is decreased, and, at the same time, NOx is reduced by the introduction of water into the flame region.

Because advantageous effects of the internal-combustion-engine fuel injection device 201 and the internal-combustion-engine fuel injection method according to this embodiment are the same as those of the second embodiment described above, descriptions thereof will be omitted herein.

### {Fourth Embodiment}

An internal-combustion-engine fuel injection device and an internal-combustion-engine fuel injection method according to a fourth embodiment of the present invention will be described.

The internal-combustion-engine fuel injection device according to this embodiment differs from those of the embodiments described above in that, when continuously injecting only the fuel, which is supplied via the fuel injection pipe 9, from the fuel-injection valve 10 (for example, when navigating outside a marine engine-exhaust-gas regulation zone (ECA: Emission Control Area)), the other fuel-injection valve 10 that injects the fuel and the one fuel-injection valve 10 that does not inject the fuel are switched according to a predetermined cycle (for example, so that, when the fuel has been injected ten times from the injection holes 13 of the other fuel-injection valve 10, the fuel-injection valve 10 that injects the fuel is switched from the other fuel-injection valve 10 to the one fuel-injection valve 10 to perform the fuel injection, and, when the fuel has been injected ten times from the injection holes 13 of the one fuel-injection valve 10, the fuel-injection valve 10 that injects the fuel is switched from the one fuel-injection valve 10 to the other fuel-injection valve 10). Because other components are the same as those of the embodiments described above, descriptions of those components will be omitted herein.

In this embodiment, the controller 54 receives inputs about the number of injections performed by the individual fuel-injection valves 10 in addition to the engine-operating-state detection values from the engine-operating-state detection units, such as the rotational-speed detector 50, the scavenging-air-pressure detector 51, the rack-position detector 52, the exhaust-temperature detector 53, and so forth, the ship position data from the navigation assistance device (not shown) that judges whether the ship is located in a marine engine-exhaust-gas regulation zone or located outside of a marine engine-exhaust-gas regulation zone, and position data from switches operated by a navigator/sailor in the bridge or an engineer/engine-room worker in the engine room who has judged that the ship is in a marine engine-exhaust-gas regulation zone or that the ship is outside of a marine engine-exhaust-gas regulation zone. Then, when the number of injections for the fuel-injection valve 10 that is injecting the fuel reaches the predetermined number, the controller 54 outputs the fuel-blocking command signal to the operating-air control valve 47 that is disposed in correspondence with the other fuel-injection valve 10, thus causing the operating-air control valve 47 to be operated, the controller 54 also outputs a fuel-block cancelling command signal to the operating-air control valve 47 that is disposed in correspondence with the one fuel-injection valve 10, thus stopping the operation of the operating-air control valve 47, and thus, the fuel-injection valve 10 that injects the fuel is switched from the other fuel-injection valve 10 to the one fuel-injection valve 10.

With the internal-combustion-engine fuel injection device and the internal-combustion-engine fuel injection method according to this embodiment, when injecting only the fuel oil into the cylinder liner 110 (see Figs. 11 and 12), the fuel-injection valve for which the fuel injection is blocked and the fuel-injection valve for which the fuel injection is allowed are switched according to the predetermined cycle.

By doing so, the thermal load on the cylinder liner 110 can be made more uniform (dispersed) in the circumferential direction, and it is possible to reliably avoid local concentration of thermal stress.

Because other advantageous effects are the same as those of the embodiments described above, descriptions thereof will be omitted herein.

### {Fifth Embodiment}

An internal-combustion-engine fuel injection device and an internal-combustion-engine fuel injection method according to a fifth embodiment of the present invention will be described with reference to Figs. 11 and 12.

Figs. 11 and 12 each show a schematic diagram showing a fuel flame state in one cylinder (cylinder interior) of an internal combustion engine equipped with the internal-combustion-engine fuel injection device according to this embodiment.

As shown in Figs. 11 and 12, the internal-combustion-engine fuel injection device according to this embodiment differs from those of the first embodiment and the second embodiment described above in that each fuel-injection pump 4A is provided with four fuel-injection valves 10, specifically, at the peak portion of the cylinder cover (not shown) at equal intervals (90° intervals) around the circumferential direction of a cylinder liner 110. Because other components are the same as those of the first embodiment and the second embodiment described above, descriptions of those components will be omitted herein.

Note that the same reference signs are assigned to the components that are the same as those of the first embodiment and the second embodiment described above, and descriptions thereof will be omitted.

In this embodiment, one fuel-injection pump 4A is provided in each cylinder of the internal combustion engine; each fuel-injection pump 4A is provided with two pairs of, that is, four, fuel-injection valves 10; when continuously injecting only the fuel, which is supplied via the fuel injection pipe 9, from the fuel-injection valves 10 (for example, when navigating outside a marine engine-exhaust-gas regulation zone (ECA: Emission Control Area)), the supply of the multi-layer liquid column from the fuel/water-supply pipe 64 is blocked for both fuel-injection valves 10;, as shown in Fig. 11, the fuel supply from the fuel injection pipe 9 to the pair of fuel-injection valves 10 that are disposed facing each other (in Figs. 11 and 12, the fuel-injection valves 10 disposed at the lower left portion and the upper right portion) is also blocked; the fuel supply from the fuel injection pipe 9 is allowed only to the other pair of the fuel-injection valves 10 that are disposed facing each other (in Figs. 11 and 12, the fuel-injection valves 10 disposed at the upper left portion and the lower right portion); and the fuel is injected only from the other pair (another pair) of the fuel-injection valves 10 that are disposed facing each other.

With the internal-combustion-engine fuel injection device and the internal-combustion-engine fuel injection method according to this embodiment, when injecting only the fuel oil into the cylinder liner 110 (see Figs. 11 and 12), the air-pressure actuator (valve-opening-pressure adjusting device) 30 is operated, and, of the fuel-injection valves 10, the needle valves 15 of one pair of the fuel-injection valves 10 that are disposed facing each other are pressed by a force equal to or greater than the valve-opening pressure of the needle valves 15, thus blocking the fuel injection from those fuel-injection valves 10.

By doing so, the thermal load on the cylinder liner 110 can be made (substantially) uniform (dispersed) in the circumferential direction, and it is possible to avoid local concentration of thermal stress.

Because other advantageous effects are the same as those of the first embodiment and the second embodiment described above, descriptions thereof will be omitted herein.

### {Sixth Embodiment}

An internal-combustion-engine fuel injection device and an internal-combustion-engine fuel injection method according to a sixth embodiment of the present invention will be described.

The internal-combustion-engine fuel injection device according to this embodiment differs from that of the fifth embodiment described above in that, when continuously injecting only the fuel, which is supplied via the fuel injection pipe 9, from the fuel-injection valves 10 (for example, when navigating outside a marine engine-exhaust-gas regulation zone (ECA: Emission Control Area)), the other pair of fuel-injection valves 10 that inject the fuel and the one pair of fuel-injection valves 10 that do not inject the fuel are switched according to a predetermined cycle (for example, so that, when the fuel has been injected ten times from the injection holes 13 of the other pair of fuel-injection valves 10, the fuel-injection valves 10 that inject the fuel are switched from the other pair of fuel-injection valves 10 to the one pair of fuel-injection valves 10 to perform the fuel injection, and, when the fuel has been injected ten times from the injection holes 13 of the one pair of fuel-injection valves 10, the fuel-injection valves 10 that inject the fuel are switched from the one pair of fuel-injection valves 10 to the other pair of fuel-injection valves 10). Because other components are the same as those of the fifth embodiment described above, descriptions of those components will be omitted herein.

With the internal-combustion-engine fuel injection device and the internal-combustion-engine fuel injection method according to this embodiment, when injecting only the fuel oil into the cylinder liner 110 (see Figs. 11 and 12), the one pair of fuel-injection valves for which the fuel injection is blocked and the other pair of fuel-injection valves for which the fuel injection is allowed are switched according to the predetermined cycle.

By doing so, the thermal load on the cylinder liner 110 can be made more uniform (dispersed) in the circumferential direction, and it is possible to reliably avoid local concentration of thermal stress.

Because other advantageous effects are the same as those of the fifth embodiment described above, descriptions thereof will be omitted herein.

Note that the present invention is not limited to the embodiments described above, and appropriate modifications and alterations are permissible as needed.

For example, although the embodiments described above have been described in terms of specific examples in which each fuel-injection pump 4A is provided with two or four fuel-injection valves 10, the number of the fuel-injection valves 10 provided in each fuel-injection pump 4A may be three, five, six in three pairs, seven, eight in four pairs, and so on, and the present invention is not limited by the number of the fuel-injection valves 10.

In addition, in the embodiments described above, other inert substances may be used instead of water.

Furthermore, the present invention may be employed not only in a system (fuel injection device) in which fuel oil and water are injected in a multi-layer form, but also in a system (fuel injection device) in which fuel oil and water are injected in the form of an emulsion.

Additionally, as the air-pressure actuator (valve-opening-pressure adjusting device) 30, an air-pressure actuator 130 whose configuration is like the one shown in Fig. 13 may be employed, that is, having a configuration in which scavenging air (pressure) of an internal combustion engine is utilized as a driving force (trigger) for blocking the fuel supply from the fuel-injection pipe 9 to the one or one pair of (alternatively, the other or the other pair of) fuel-injection valve(s) 10. In other words, instead of the air source 46, scavenging air supplied from a scavenging-air chamber 120 of an internal combustion engine, indicated as a "main engine" in Fig. 13, is used as a driving source for operating the air-pressure actuator 130, so that the fuel injection from the fuel-injection valve(s) 10 is blocked when the scavenging air pressure is lower than a predetermined value, and the fuel injection from the fuel-injection valve(s) 10 is allowed when the scavenging air pressure is greater than the predetermined value. Specifically, even when the controller 54 has output the fuel-blocking command signal to the operating-air control valve 47 and the operating-air control valve 47 is operating, the fuel is injected from the one and the other (alternatively, the one pair and the other pair), that is to say, all of the fuel-injection valves 10, when the load on the internal combustion engine is high, and the fuel supply to the one or the one pair of (alternatively, the other or the other pair of) fuel-injection valve(s) 10 is blocked when the load on the internal combustion engine becomes lower than a predetermined load.

By doing so, even when continuously injecting only the fuel, which is supplied via the fuel injection pipe 9, from the fuel-injection valves 10 (for example, when navigating outside a marine engine-exhaust-gas regulation zone (ECA: Emission Control Area)), the fuel can automatically be injected from the one and the other (alternatively, the one pair and the other pair), that is to say, all of the fuel-injection valves 10, when the load on the internal combustion engine is high, and the fuel supply to the one or the one pair of (alternatively, the other or the other pair of) fuel-injection valve(s) 10 can automatically be blocked when the load on the internal combustion engine becomes lower than the predetermined load. As a result, the fuel-injection valve(s) 10 that injects the fuel and the fuel-injection valve(s) 10 that does not inject the fuel are automatically selected in accordance with the load on the internal combustion engine, and thus, it is possible to enhance the engine efficiency and fuel economy of the internal combustion engine.

Note that, in Fig. 13, the same reference signs are assigned to components that are the same as those of the embodiments described above. In addition, reference sign 131 in Fig. 13 indicates a spring that biases the needle valve 15 in the valve-closing direction, that is, the direction that biases the first piston 32 toward the second piston 33 (bottom side in Fig. 13).

### {Reference Signs List}

1 internal-combustion-engine fuel injection device
10 fuel-injection valve
15 needle valve
30 air-pressure actuator (valve-opening-pressure adjusting device)
101 internal-combustion-engine fuel injection device 110 cylinder liner
130 air-pressure actuator (valve-opening-pressure adjusting device)
201 internal-combustion-engine fuel injection device

## Claims

1. A fuel injection device for an internal combustion engine provided with, for one cylinder, at least two fuel-injection valves provided with valve-opening-pressure adjusting devices that adjust the valve-opening pressure of needle valves,
wherein, when injecting fuel oil and an inert substance into a cylinder liner, the fuel oil and the inert substance are injected from all of the fuel-injection valves; and
when injecting only the fuel oil into the cylinder liner, the valve-opening-pressure adjusting device is operated so that the needle valve of at least one of the at least two fuel-injection valves is pressed by a force that is equal to or greater than the valve-opening pressure of the needle valve, blocking the fuel injection from that fuel-injection valve.

2. An internal-combustion-engine fuel injection device according to Claim 1,
wherein an even number of the fuel-injection valves are provided at equal intervals around the circumferential direction of the cylinder liner; and
when injecting only the fuel oil into the cylinder liner, the valve-opening-pressure adjusting device is operated so that, of the at least two fuel-injection valves, the needle valves of at least one pair of fuel-injection valves that are disposed facing each other are pressed by a force that is equal to or greater than the valve-opening pressure of the needle valves, blocking the fuel injection from those fuel-injection valves.

3. An internal-combustion-engine fuel injection device according to Claim 1 or 2, wherein, when injecting only the fuel oil into the cylinder liner, the fuel-injection valve for which the fuel injection is blocked and the fuel-injection valve for which the fuel injection is allowed are switched according to a predetermined cycle.

4. An internal combustion engine equipped with the internal-combustion-engine fuel injection device according to any one of Claims 1 to 3.

5. A ship equipped with the internal combustion engine according to Claim 4.

6. A fuel injection method for an internal combustion engine provided with, for one cylinder, at least two fuel-injection valves provided with valve-opening-pressure adjusting devices that adjust the valve-opening pressure of needle valves,
wherein, when injecting fuel oil and an inert substance into a cylinder liner, the fuel oil and the inert substance are injected from all of the fuel-injection valves; and
when injecting only the fuel oil into the cylinder liner, the valve-opening-pressure adjusting device is operated so that the needle valve of at least one of the at least two fuel-injection valves is pressed by a force that is equal to or greater than the valve-opening pressure of the needle valve, blocking the fuel injection from that fuel-injection valve.

7. A fuel injection method according to Claim 6, wherein,
in the internal combustion engine, an even number of the fuel-injection valves are provided at equal intervals around the circumferential direction of the cylinder liner; and
when injecting only the fuel oil into the cylinder liner, the valve-opening-pressure adjusting device is operated so that, of the at least two fuel-injection valves, the needle valves of at least one pair of fuel-injection valves that are disposed facing each other are pressed by a force that is equal to or greater than the valve-opening pressure of the needle valves, blocking the fuel injection from those fuel-injection valves.

8. A fuel injection method according to Claim 6 or 7, wherein,
in the internal combustion engine, when injecting only the fuel oil into the cylinder liner, the fuel-injection valve for which the fuel injection is blocked and the fuel-injection valve for which the fuel injection is allowed are switched according to a predetermined cycle.

## Patentansprüche

1. Kraftstoffeinspritzvorrichtung für eine Brennkraftmaschine, die versehen ist mit zumindest zwei Kraftstoffeinspritzventilen für einen Zylinder, die mit Ventilöffnungsdruckeinstellvorrichtungen versehen sind, die den Ventilöffnungsdruck von Nadelventilen einstellen,
wobei, wenn Heizöl und eine inerte Substanz in eine Zylinderlaufbuchse eingespritzt werden, das Heizöl und die inerte Substanz von allen Kraftstoffeinspritzventilen eingespritzt werden, und
wenn nur das Heizöl in die Zylinderlaufbuchse eingespritzt wird, die Ventilöffnungsdruckeinstellvorrichtung so betätigt wird, dass das Nadelventil von zumindest einem der mindestens zwei Kraftstoffeinspritzventile durch eine Kraft beaufschlagt wird, die gleich oder größer ist als der Ventilöffnungsdruck des Nadelventils, wodurch die Kraftstoffeinspritzung von dem Kraftstoffeinspritzventil gesperrt wird.

2. Brennkraftmaschine-Kraftstoffeinspritzvorrichtung nach Anspruch 1, wobei eine gerade Anzahl von Kraftstoffeinspritzventilen in gleichen Intervallen um die Umfangsrichtung der Zylinderlaufbuchse vorgesehen ist, und
wenn nur das Heizöl in die Zylinderlaufbuchse eingespritzt wird, die Ventilöffnungsdruckeinstellvorrichtung so betrieben wird, dass von den wenigstens zwei Kraftstoffeinspritzventilen die Nadelventile von mindestens einem Paar von Kraftstoffeinspritzventilen, die einander zugewandt vorgesehen sind, durch eine Kraft beaufschlagt werden, die gleich oder größer ist als der Ventilöffnungsdruck der Nadelventile, wodurch die Kraftstoffeinspritzung von diesen Kraftstoffeinspritzventilen gesperrt wird.

3. Brennkraftmaschine-Kraftstoffeinspritzvorrichtung nach Anspruch 1 oder 2, wobei, wenn nur das Heizöl in die Zylinderlaufbuchse eingespritzt wird, das Kraftstoffeinspritzventil, für das die Kraftstoffeinspritzung gesperrt ist, und das Kraftstoffeinspritzventil, für das die Kraftstoffeinspritzung gestattet ist, entsprechend einem vorbestimmten Zyklus gewechselt werden.

4. Brennkraftmaschine, die mit der Brennkraftmaschine-Kraftstoffeinspritzvorrichtung nach einem der Ansprüche 1 bis 3 ausgestattet ist.

5. Schiff, das mit der Brennkraftmaschine nach Anspruch 4 ausgestattet ist.

6. Kraftstoffeinspritzverfahren für eine Brennkraftmaschine, die versehen ist mit zumindest zwei Kraftstoffeinspritzventilen für einen Zylinder, die mit Ventilöffnungsdruckeinstellvorrichtungen, die den Ventilöffnungsdruck von Nadelventilen einstellen,
wobei, wenn Heizöl und eine inerte Substanz in eine Zylinderlaufbuchse eingespritzt werden, das Heizöl und die inerte Substanz von allen Kraftstoffeinspritzventilen eingespritzt werden, und
wenn nur das Heizöl in die Zylinderlaufbuchse eingespritzt wird, die Ventilöffnungsdruckeinstellvorrichtung so betrieben wird, dass das Nadelventil von mindestens einem der mindestens zwei Kraftstoffeinspritzventile durch eine Kraft beaufschlagt wird, die gleich oder größer ist als der Ventilöffnungsdruck des Nadelventils, wodurch die Kraftstoffeinspritzung von dem Kraftstoffeinspritzventil gesperrt wird.

7. Kraftstoffeinspritzverfahren nach Anspruch 6, wobei
in der Brennkraftmaschine eine gerade Anzahl der Kraftstoffeinspritzventile in gleichen Intervallen um die Umfangsrichtung der Zylinderlaufbuchse vorgesehen ist, und
wenn nur das Heizöl in die Zylinderlaufbuchse eingespritzt wird, die Ventilöffnungsdruckeinstellvorrichtung so betrieben wird, dass von den wenigstens zwei Kraftstoffeinspritzventilen die Nadelventile von mindestens einem Paar von Kraftstoffeinspritzventilen, die einander zugewandt vorgesehen sind, durch eine Kraft beaufschlagt werden, die gleich oder größer ist als der Ventilöffnungsdruck der Nadelventile, wodurch die Kraftstoffeinspritzung von diesen Kraftstoffeinspritzventilen betrieben wird.

8. Kraftstoffeinspritzverfahren nach Anspruch 6 oder 7, wobei,
in der Brennkraftmaschine, wenn nur das Heizöl in die Zylinderlaufbuchse eingespritzt wird, das Kraftstoffeinspritzventil, für das die Kraftstoffeinspritzung betrieben ist, und das Kraftstoffeinspritzventil, für das die Kraftstoffeinspritzung gestattet ist, entsprechend einem vorbestimmten Zyklus gewechselt werden

## Revendications

1. Dispositif d'injection de carburant pour un moteur à combustion interne pourvu, pour un cylindre, d'au moins deux soupapes d'injection de carburant pourvues de dispositifs d'ajustement de pression d'ouverture de soupapes qui ajustent la pression d'ouverture de soupapes à pointeau,
dans lequel, lors de l'injection de mazout et d'une substance inerte dans une chemise de cylindre, le mazout et la substance inerte sont injectés par la totalité des soupapes d'injection de carburant ; et, lors de la seule injection du mazout dans la chemise de cylindre, le dispositif d'ajustement de pression d'ouverture de soupapes est mis en service pour que la soupape à pointeau d'au moins l'une des au moins deux soupapes d'injection de carburant soit comprimée par une force qui est égale ou supérieure à la pression d'ouverture de la soupape à pointeau, bloquant l'injection de carburant à partir de cette soupape d'injection de carburant.

2. Dispositif d'injection de carburant pour moteur à combustion interne selon la revendication 1,
dans lequel un nombre pair des soupapes d'injection de carburant sont prévues à intervalles égaux dans la direction circonférentielle de la chemise de cylindre ; et,
lors de la seule injection du mazout dans la chemise de cylindre, le dispositif d'ajustement de pression d'ouverture de soupapes est mis en service pour que, des au moins deux soupapes d'injection de carburant, les soupapes à pointeau d'au moins une paire de soupapes d'injection de carburant qui sont disposées l'une en face de l'autre soient comprimées par une force qui est égale ou supérieure à la pression d'ouverture des soupapes à pointeau, bloquant l'injection de carburant à partir de ces soupapes d'injection de carburant.

3. Dispositif d'injection de carburant pour moteur à combustion interne selon la revendication 1 ou 2, dans lequel, lors de la seule injection du mazout dans la chemise de cylindre, la soupape d'injection de carburant pour laquelle l'injection de carburant est bloquée et la soupape d'injection de carburant pour laquelle l'injection de carburant est permise sont permutées selon un cycle prédéterminé.

4. Moteur à combustion interne équipé du dispositif d'injection de carburant pour moteur à combustion interne selon l'une quelconque des revendications 1 à 3.

5. Navire équipé du moteur à combustion interne selon la revendication 4.

6. Procédé d'injection de carburant pour un moteur à combustion interne pourvu, pour un cylindre, d'au moins deux soupapes d'injection de carburant pourvues de dispositifs d'ajustement de pression d'ouverture de soupapes qui ajustent la pression d'ouverture de soupapes à pointeau,
dans lequel, lors de l'injection de mazout et d'une substance inerte dans une chemise de cylindre, le mazout et la substance inerte sont injectës par la totalité des soupapes d'injection de carburant ; et, lors de la seule injection du mazout dans la chemise de cylindre, le dispositif d'ajustement de pression d'ouverture de soupapes est mis en service pour que la soupape à pointeau d'au moins l'une des au moins deux soupapes d'injection de carburant soit comprimée par une force qui est égale ou supérieure à la pression d'ouverture de la soupape à pointeau, bloquant l'injection de carburant à partir de cette soupape d'injection de carburant.

7. Procédé d'injection de carburant selon la revendication 6, dans lequel,
dans le moteur à combustion interne, un nombre pair des soupapes d'injection de carburant sont prévues à intervalles égaux dans la direction circonférentielle de la chemise de cylindre ; et,
lors de la seule injection du mazout dans la chemise de cylindre, le dispositif d'ajustement de pression d'ouverture de soupapes est mis en service pour que, des au moins deux soupapes d'injection de carburant, les soupapes à pointeau d'au moins une paire des soupapes d'injection de carburant qui sont disposées l'une en face de l'autre soient comprimées par une force qui est égale ou supérieure à la pression d'ouverture des soupapes à pointeau, bloquant l'injection de carburant à partir de ces soupapes d'injection de carburant.

8. Procédé d'injection de carburant selon la revendication 6 ou 7, dans lequel,
dans le moteur à combustion interne, lors de la seule injection du mazout dans la chemise de cylindre, la soupape d'injection de carburant pour laquelle l'injection de carburant est bloquée et la soupape d'injection de carburant pour laquelle l'injection de carburant est permise sont permutées selon un cycle prédéterminé.
